# EUROPEAN PATENT APPLICATION

(11) **EP 4 206 748 A1**
(43) Date of publication of application: **05.07.2023**
(21) Application number: 22216752.0
(22) Date of filing: 27.12.2022
(51) Int. Cl.: G01V 5/00, G01N 23/046

(54) **INSPECTION APPARATUS**

(30) Priority: 29.12.2021 CN 202111636159
(71) Applicant: Nuctech Company Limited, TongFang Building Shuangqinglu Road Haidian District Beijing 100084 (CN)
(72) Inventor: HUANG, Qingping, BEIJING, 100084 (CN); HONG, Mingzhi, BEIJING, 100084 (CN); WANG, Zinan, BEIJING, 100084 (CN); ZHANG, Liguo, BEIJING, 100084 (CN)
(74) Representative: Cabinet Beau de Loménie

(57) **Abstract**

According to the present disclosure, there is provided an inspection apparatus, including: an inspection device configured to define an inspection channel passing through the inspection device and configured to emit a ray toward an object passing through the inspection channel to implement an inspection, wherein the inspection device includes an annular structure; and a conveyor belt configured as a conveyor belt loop, wherein a first surface of the conveyor belt serves as a bearing surface for bearing an inspected object, and the first surface of the conveyor belt passes through the inspection device along the inspection channel only once.

## Description

### TECHNICAL FIELD

The present disclosure relates to a field of security inspection, and more particularly, to an inspection apparatus.

### BACKGROUND

Computed tomography (hereinafter "CT") inspection apparatuses are widely used in various inspections, and have been currently used for security inspection of luggage. In a CT inspection apparatus, for example, an X-ray CT generating device and a detection device are mounted on a circular bearing for performing a rotary motion. A space defined by a central hole of the circular bearing constitutes an inspection passage.

It is desirable to provide a CT inspection apparatus having an improved performance so that the inspection efficiency may be improved.

### SUMMARY

According to an aspect of the present disclosure, an inspection apparatus is provided. The inspection apparatus includes an inspection device and a conveyor belt. The inspection device is configured to define an inspection channel passing through the inspection device, is configured to emit a ray toward an object passing through the inspection channel to implement an inspection, and includes an annular structure. The conveyor belt is configured as a conveyor belt loop. A first surface of the conveyor belt serves as a bearing surface for bearing an inspected object, and the first surface of the conveyor belt passes through the inspection device along the inspection channel only once.

In an embodiment, the first surface of the conveyor belt is configured to pass a lower portion of the inspection device and the first surface faces a direction away from the inspection device.

In an embodiment, the inspection apparatus further includes a cleaning device configured to clean the first surface.

In an embodiment, the conveyor belt is configured to move within the inspection channel from a first side of the inspection device to a second side of the inspection device, and the second side is opposite the first side; and wherein the cleaning device is configured to be clear of the inspection device, and the conveyor belt is configured to be cleaned by the cleaning device before reaching the first side of the inspection device.

In an embodiment, the cleaning device is arranged on the second side of the inspection device, and the conveyor belt is configured to move to the first side of the inspection device after being cleaned by the cleaning device.

In an embodiment, the cleaning device is arranged below the inspection device, and the conveyor belt is configured to move to the first side of the inspection device after being cleaned by the cleaning device.

In an embodiment, the inspection apparatus further includes at least one driving wheel configured to drive the conveyor belt to move.

In an embodiment, the inspection apparatus further includes a plurality of steering wheels configured to guide the conveyor belt, wherein the driving wheel and the plurality of steering wheels are configured to tension the conveyor belt to form the conveyor belt loop.

In an embodiment, the cleaning device is configured to clean the first surface by using water or a cleaning agent solution.

In an embodiment, the inspection apparatus further includes a drying device configured to spray gas toward the first surface from a side of the conveyor belt loop, wherein the drying device is located downstream of the cleaning device in a moving direction of the conveyor belt.

In an embodiment, the conveyor belt loop includes a first section and is configured to move obliquely downward relative to a vertical direction in the first section. The cleaning device is arranged on a side of first section to clean the first surface of the first section.

In an embodiment, the conveyor belt loop includes a second section and is configured to move obliquely upward relative to the vertical direction in the second section. The drying device is arranged on a side of the second section to dry the first surface of the second section, and the second section is located downstream of the first section in the moving direction of the conveyor belt.

In an embodiment, the inspection apparatus is configured to inspect an edible object or an object prone to bring a residue.

### BRIEF DESCRIPTION OF THE DRAWINGS

One or more embodiments of the present disclosure will now be described by way of example only with reference to the accompanying drawings.
FIG. 1 shows a schematic diagram of a CT inspection apparatus according to the present disclosure, wherein a left portion schematically shows a cross-sectional view of a security inspection apparatus, and a right portion schematically shows a side view of the security inspection apparatus.
FIG. 2 shows a schematic diagram of a CT inspection apparatus according to the present disclosure, wherein a drying device is included.
FIG. 3 shows a schematic diagram of a conveyor belt loop of a CT inspection apparatus according to the present disclosure.

### DETAILED DESCRIPTION OF EMBODIMENTS

In the following embodiments, terms such as "first" and "second" are used to distinguish different components, rather than sequencing or indicating primary and secondary. Terms indicating orientations such as "upper" and "lower" in the specification are not intended to indicate an absolute orientation, but refers to a relative position between the components.

According to an aspect of the present disclosure, there is provided an inspection apparatus, including an inspection device configured to define an inspection channel passing through the inspection device and emit a ray toward an object passing through the inspection channel to implement an inspection. The inspection device may include, for example, a ray source and a detector (not shown in the drawing). The ray source emits a ray toward an object, and the detector detects the ray interacted with the object, thereby completing the inspection of the object. For example, the inspection device includes an X-ray source, the X-ray source emits a ray toward an object being conveyed on the inspection channel, and the detector detects the ray penetrating the object, thereby completing the inspection of the object. The inspection device may also emit X-rays toward the object from multiple angles in a time-sharing manner, and detect the ray penetrating the object each time to form a three-dimensional image of the object by processing the detected signal. In an embodiment, the inspection apparatus may be a CT inspection apparatus.

In an embodiment, the inspection apparatus further includes a conveyor belt 21 configured as a conveyor belt loop. A first surface 21-1 of the conveyor belt 21 serves as a bearing surface for bearing an inspected object, and the first surface 21-1 of the conveyor belt 21 passes through the inspection device along the inspection channel only once. In an embodiment, the conveyor belt 21 passing through the inspection device only once may be understood as that the conveyor belt 21 passes through the inspection device (specifically, passes through the inspection channel) only once, and then passes an outside of the inspection device, thereby completing a loop. For example, after the conveyor belt 21 pass through the inspection device (specifically, passes through the inspection channel) once from left to right, the conveyor belt 21 will not pass through the inspection device again from right to left, but operates at the outside of the inspection device from right to left, thereby achieving the conveyor belt loop. However, it should be understood that the left and right here are only an example to illustrate an operation manner of the conveyor belt 21.

In an embodiment, the conveyor belt 21 passing through the inspection device only once may be understood as that the conveyor belt 21 passes only once between the ray source and the detector, rather than reciprocating between the ray source and the detector. After passing between the ray source and the detector, the conveyor belt 21 bypasses the outside of the inspection device, thereby forming a closed conveyor belt loop. For example, in a case of a rackless inspection apparatus, a distributed ray source and a detector array are used, the conveyor belt passes between the ray source and the detector array and is retraced from an outside of the distributed ray source and the detector array, thereby forming a conveyor belt loop.

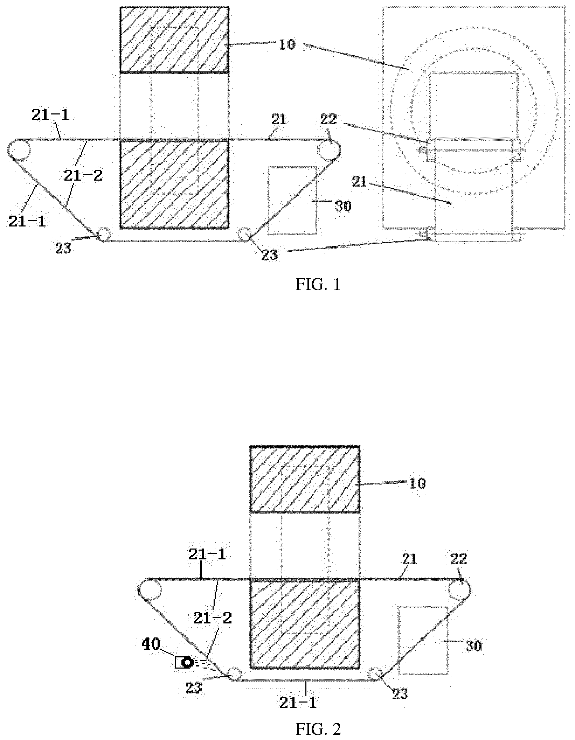

As shown in FIG. 1, in an embodiment of the present disclosure, the inspection apparatus may be a CT inspection apparatus, and the CT inspection apparatus includes an inspection device. In the present embodiment, the inspection device of the CT inspection apparatus includes an annular structure 10 for performing a CT inspection, and the annular structure is a main body of the CT inspection apparatus. The annular structure 10 defines a security inspection channel passing through the annular structure. The inspection device of the CT inspection apparatus further includes a conveyor belt 21 configured as a conveyor belt loop. The first surface 21-1 (an upper surface of the conveyor belt in a conveying channel in FIG. 1) of the conveyor belt 21 serves as a bearing surface for bearing the inspected object, and the first surface 21-1 of the conveyor belt 21 passes through the security inspection channel along the security inspection channel only once. In FIG. 1, the first surface 21-1 and a second surface 21-2 of the conveyor belt are shown. In the present embodiment, the ray source and the detector are arranged on the annular structure 10, and the ray source and the detector are arranged opposite each other. The annular structure 10 may extend in a conveying direction, and in this way, the annular structure 10 defines the conveying channel. The annular structure 10 defines a space inside the annular structure, e.g., a cylindrical space, and the annular structure 10 may rotate. However, the space inside the annular structure 10 is not necessarily a strict cylinder, and in fact the space inside the annular structure 10 is defined by an inner wall of the annular structure 10. An inner space of the annular structure 10 is required to be as large as possible, so that more objects may be accommodated while passing through the annular structure 10 for inspection. The annular structure 10 may include an outer wall, and a shape of the outer wall is not necessarily cylindrical. The annular structure 10 may include other accessories, and therefore the annular structure 10 may have any necessary shape as required. The oppositely arranged ray source and the detector may be kept rotating on a circular trajectory by the annular structure 10. The oppositely arranged ray source and the detector on the annular structure 10 refer to that the ray source is arranged at one end of a diameter of the circular trajectory, while the detector is arranged at an opposite other end of the diameter of the circular trajectory. The conveyor belt passes through the inner space of the annular structure 10 and bypasses the outside of the annular structure 10, thereby forming a closed conveyor belt loop mutually nested with the annular structure 10.

Since the conveyor belt 21 forms the conveyor belt loop, the conveyor belt 21 may pass through the security inspection channel cyclically and continuously, thereby avoiding an operation of feeding an object into the CT inspection apparatus, and taking the object out from the CT inspection apparatus after a completion of an inspection in a conveying device of an existing CT inspection apparatus, thereby greatly improving an inspection efficiency. In addition, since the conveyor belt 21 itself has a small volume and occupies few space, an increased amount of objects may be allowed to enter the inspection apparatus for inspection per unit time.

In an embodiment of the present disclosure, the inspection apparatus is used to inspect an edible object or an object prone to bring a residue. An edible object includes foods, such as pork. As an example, a contamination of pork is required to be avoided during the CT security inspection, and the conveyor belt 21 is required to be cleaned because the pork will leave residues such as grease or mince. An existing conveying device may not meet such requirements, and as a result, an existing inspection apparatus may not be used for a security inspection of foods such as pork. Moreover, since a conveying device of an existing inspection apparatus performs a reciprocating motion, the inspection efficiency is greatly limited.

In the embodiment of the present disclosure, since the bearing surface of the conveyor belt 21 may continuously pass through the security inspection channel, the inspected object, such as pork, may be continuously fed into the inspection apparatus, and the pork is allowed to be conveyed to another transportation device to be transferred away. In this way, the inspection efficiency is significantly improved.

In the embodiment of the present disclosure, the first surface 21-1 of the conveyor belt 21 passes a lower portion of the annular structure 10, so that the first surface 21-1 faces a direction away from the annular structure 10. Since the first surface 21-1 passes the lower portion of the annular structure 10 and faces the direction away from the annular structure 10, food residues and the like on the first surface 21-1 will not fall into the inspection apparatus.

In the embodiment of the present disclosure, the inspection apparatus further includes a cleaning device 30 configured to clean the first surface 21-1. Since the cleaning device 30 may clean the first surface 21-1, the conveyor belt 21 may be continuously fed into the inspection apparatus and kept clean without bringing cross-contamination.

In the embodiment of the present disclosure, as shown in FIG. 1, within the conveying channel of the annular structure 10, the conveyor belt 21 moves from a first side (left side) of the annular structure 10 to a second side (right side) of the annular structure 10, and the second side is opposite the first side. For example, as shown in FIG. 1, the conveyor belt 21 located at the lower portion of the annular structure 10 moves from the right side of the annular structure 10 to the left side of the annular structure 10. The cleaning device 30 is arranged away from the annular structure 10, so as to avoid bringing contamination. Moreover, advantageously, due to the arrangement of the present embodiment, the cleaning device 30 may be allowed to be clear of the annular structure 10. The conveyor belt 21 passes the cleaning device 30 and is cleaned by the cleaning device before reaching the first side of the annular structure 10.

In the embodiment of the present disclosure, as shown in FIG. 1, the cleaning device 30 is located on the right side of the annular structure 10. In FIG. 1, the conveyor belt 21 penetrates the cleaning device 30. However, this is not necessary. In another embodiment, the cleaning device 30 may face the conveyor belt 21 and spray a cleaning liquid toward the first surface 21-1. Subsequently, the conveyor belt 21 moves to the left side of the annular structure 10.

In the embodiment of the present disclosure, the cleaning device 30 is arranged below the annular structure 10, and the conveyor belt 21 moves to the left side of the annular structure 10 after being cleaned by the cleaning device 30.

In the embodiment of the present disclosure, the inspection apparatus further includes at least one driving wheel 22 for driving the conveyor belt 21 to move. As shown in FIG. 1, the driving wheel 22 may be a driving wheel 22 shown on the right side. In another embodiment, the driving wheel 22 may be a driving wheel 22 on the right side and a driving wheel 22 on the left side.

In the embodiment of the present disclosure, the inspection apparatus further includes a plurality of steering wheels 23 for guiding the conveyor belt 21, wherein the driving wheel 22 and the steering wheel 23 are configured to tension the conveyor belt 21 so as to form the conveyor belt loop. As shown in FIG. 1, two driving wheels 22 and two steering wheels 23 on the left and right sides tension the conveyor belt 21 to form the conveyor belt loop. In another embodiment, only one drive wheel 22 on the right side and the other three steering wheels 23 are provided. In another embodiment, only one steering wheel 23 is provided on a lower portion. In another embodiment, a plurality of steering wheels 23, such as four steering wheels 23 and five steering wheels 23 are included, and the conveyor belt 21 is guided to a suitable position for cleaning.

In the embodiment of the present disclosure, the cleaning device 30 uses water or a cleaning agent solution to clean the first surface 21-1. For example, the cleaning device 30 includes a spray head configured to spray a liquid, such as water, toward the first surface 21-1. In an embodiment, the spray head sprays a cleaning solution toward the first surface 21-1.

In an embodiment, the inspection apparatus further includes another cleaning device. In the present embodiment, the spray head of the cleaning device sprays the cleaning solution toward the first surface 21-1, and subsequently, another cleaning device is used to spray water to clean the first surface 21-1 again. At this time, the grease on the first surface 21-1 may be cleaned.

In the embodiment of the present disclosure, as shown in FIG. 2, the security inspection apparatus further includes a drying device 40 configured to spray gas toward the first surface 21-1 on a side of the conveyor belt loop. It is advantageous to provide the drying device 40. Liquids adhere to the first surface 21-1 after cleaning, and these liquids may drip when the first surface 21-1 faces downward. However, a small amount of liquids may still be present on the first surface 21-1. When the conveyor belt 21 subsequently enters the annular structure 10 of the inspection device again, these residual liquids on the first surface 21-1 may drip into the inspection device, which is disadvantageous. After the drying device 40 is additionally mounted, since the first surface 21-1 faces downward, the residual liquids may be quickly blown away from the first surface 21-1, and partial liquids are quickly volatilized.

In an embodiment, the drying device 40 sprays the gas toward the first surface 21-1 in an oblique direction. That is, the drying device 40 sprays the gas toward the first surface 21-1 from a side of a transverse direction of the conveying direction of the conveyor belt 21 toward the other side (obliquely from an outside of a paper surface to an inside of the paper surface), and the liquids are blown away from the first surface 21-1 by the gas along the transverse direction.

In an embodiment, the drying device 40 obliquely blows away the liquids toward the first surface 21-1 along the conveying direction (from left to right as shown in FIG. 1). In the present embodiment, the first surface 21-1 moves from right to left below the annular structure 10, while the drying device 40 sprays the gas obliquely from left to right, which may accelerate the liquids to leave the first surface 21-1.

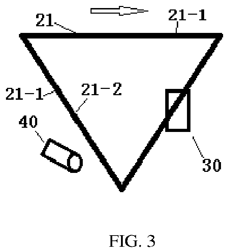

In an embodiment, the conveyor belt loop may be arranged as an inverted triangle. FIG. 3 shows a schematic diagram of an arrangement of a conveyor belt loop, wherein the annular structure 10 of the inspection apparatus is omitted. In the present embodiment, the cleaning device is arranged on a right waist side of the inverted triangle, and the drying device 40 is arranged on a left waist side of the inverted triangle. Since the first surface 21-1 serves as a waist of the inverted triangle, the first surface 21-1 has a large inclination angle, which is beneficial for a liquid for cleaning to drip from the first surface 21-1 or be blown away by the drying device 40, thereby improving the cleaning and drying efficiency of the conveyor belt 21. In the present embodiment, the steering wheels 23 are reduced, so that the conveying mechanism is simplified.

In an embodiment, as shown in FIG. 2, the cleaning device is arranged on a right waist side of an inverted trapezoid, and the drying device 40 is arranged on a left waist side of the inverted trapezoid. Since the first surface 21-1 serves as a waist of the inverted trapezoid, the first surface 21-1 has a large inclination angle, which is beneficial for a liquid for cleaning to drip from the first surface 21-1, and at the same time, when the first surface 21-1 serves as the left side waist of the inverted trapezoid, the liquid on the first surface 21-1 is blown away by the drying device 40, thereby improving the cleaning and drying efficiency of the conveyor belt 21.

In the embodiment of the present disclosure, the conveyor belt loop is configured to include a first section (e.g., the right side waist of the inverted triangle in FIG. 3), wherein the conveyor belt 21 moves obliquely downward relative to a vertical direction in the first section, and the cleaning device is arranged on a side of the first section to clean the first surface 21-1 of the first section.

In the embodiment of the present disclosure, the conveyor belt loop is configured to include a second section (e.g., the left side waist of the inverted triangle in FIG. 3), wherein the conveyor belt 21 moves obliquely upward relative to the vertical direction in the second section, and the drying device is arranged on a side of the second section to clean the first surface 21-1 of the second section.

In the inspection apparatus of the present disclosure, the conveyor belt 21 is used as the conveying device, and therefore the space in the inspection channel may be saved compared with an existing CT inspection apparatus, and at the same time, an object having a larger volume may be inspected. The conveyor belt 21 of the inspection apparatus of the present disclosure passes through the inspection apparatus only once, and therefore the inspection space of the inspection apparatus is saved, thereby simplifying the structure of the inspection apparatus. The inspection apparatus of the present disclosure includes the cleaning device, and therefore the conveyor belt 21 may be kept clean, so that the inspection of food, especially meat may be achieved and a real-time inspection may be achieved, without a need to stop the inspection separately for cleaning. Due to the inclined configuration of the conveyor belt 21, a highly efficient cleaning and drying may be achieved.

Those skilled in the art may conceive of other assemblies, devices and features thereof without departing from the scope of the appended claims. In particular, it should be noted that one or more features included in one or more drawings may be integrated into the device shown in another drawing, as will be understood by those skilled in the art. It should be understood that the detailed descriptions and specific examples are provided by way of example only, and through the descriptions, various changes and modifications within the spirit and scope of the present disclosure will become apparent to those skilled in the art.

## Claims

1. An inspection apparatus, comprising:
an inspection device configured to define an inspection channel passing through the inspection device, wherein the inspection device is further configured to emit a ray toward an object passing through the inspection channel to implement an inspection, and comprises an annular structure (10); and
a conveyor belt (21) configured as a conveyor belt loop, wherein a first surface (21-1) of the conveyor belt (21) serves as a bearing surface for bearing an inspected object, and the first surface (21-1) of the conveyor belt (21) passes through the inspection device along the inspection channel only once.

2. The inspection apparatus according to claim 1, wherein the first surface (21-1) of the conveyor belt (21) is configured to pass a lower portion of the inspection device and the first surface (21-1) faces a direction away from the inspection device.

3. The inspection apparatus according to claim 1, further comprising a cleaning device (30) configured to clean the first surface (21-1).

4. The inspection apparatus according to claim 3, wherein the conveyor belt (21) is configured to move within the inspection channel from a first side of the inspection device to a second side of the inspection device, and the second side is opposite the first side; and
wherein the cleaning device (30) is configured to be clear of the inspection device, and the conveyor belt (21) is configured to be cleaned by the cleaning device (30) before reaching the first side of the inspection device.

5. The inspection apparatus according to claim 4, wherein the cleaning device (30) is arranged on the second side of the inspection device, and the conveyor belt (21) is configured to move to the first side of the inspection device after being cleaned by the cleaning device (30).

6. The inspection apparatus according to claim 4, wherein the cleaning device (30) is arranged below the inspection device, and the conveyor belt (21) is configured to move to the first side of the inspection device after being cleaned by the cleaning device (30).

7. The inspection apparatus according to claim 1, further comprising at least one driving wheel (22) configured to drive the conveyor belt (21) to move.

8. The inspection apparatus according to claim 7, further comprising a plurality of steering wheels (23) configured to guide the conveyor belt (21), wherein the driving wheel (22) and the plurality of steering wheels (23) are configured to tension the conveyor belt (21) to form the conveyor belt loop.

9. The inspection apparatus according to claim 3, wherein the cleaning device (30) is configured to clean the first surface (21-1) by using water or a cleaning agent solution.

10. The inspection apparatus according to claim 9, further comprising a drying device (40) configured to spray gas toward the first surface (21-1) from a side of the conveyor belt loop, wherein the drying device (40) is located downstream of the cleaning device (30) in a moving direction of the conveyor belt (21).

11. The inspection apparatus according to claim 9, wherein the conveyor belt loop (21) comprises a first section, in the first section the conveyor belt (21) is configured to move obliquely downward relative to a vertical direction, and the cleaning device (30) is arranged on a side of first section to clean the first surface (21-1) of the first section.

12. The inspection apparatus according to claim 11, wherein the conveyor belt loop further comprises a second section, in the second section the conveyor belt (21) is configured to move obliquely upward relative to the vertical direction, the drying device is arranged on a side of the second section to dry the first surface (21-1) of the second section, and the second section is located downstream of the first section in the moving direction of the conveyor belt (21).

13. The inspection apparatus according to claim 1, wherein the inspection apparatus is configured to inspect an edible object or an object prone to bring a residue.
